(19) Europäisches Patentamt
European Patent Office
Office européen des brevets

(11) **EP 4 286 832 B1**

(12) **EUROPEAN PATENT SPECIFICATION**

(45) Date of publication and mention
of the grant of the patent:
**05.06.2024 Bulletin 2024/23**

(21) Application number: **22461557.5**

(22) Date of filing: **31.05.2022**

(51) International Patent Classification (IPC):
**G01N 21/3586** [(2014.01)]  **G01N 21/3577** [(2014.01)]
**G01N 21/41** [(2006.01)]

(52) Cooperative Patent Classification (CPC):
**G01N 21/4133; G01N 21/3577; G01N 21/3586**

(54) **METHOD OF MEASURING REFRACTIVE INDEX OF LIQUID SUBSTANCE UNDER TEST**

**VERFAHREN ZUR MESSUNG DES BRECHUNGSINDEXES EINER FLÜSSIGEN SUBSTANZ IM TEST**

**PROCÉDÉ DE MESURE D'INDICE DE RÉFRACTION DE SUBSTANCE LIQUIDE EN COURS DE TEST**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.12.2023 Bulletin 2023/49**

(73) Proprietor: **Instytut Wysokich Cisnien Polskiej Akademii Nauk**
**01-142 Warszawa (PL)**

(72) Inventors:
• **STELMASZCZYK, Kamil**
**Warszawa (PL)**
• **KARPIERZ-MARCZEWSKA, Ewelina**
**Warszawa (PL)**
• **MIKHNEV, Valeri**
**Warszawa (PL)**
• **SKOTNICKI, Tomasz**
**Warszawa (PL)**
• **KNAP, Wojciech**
**Warszawa (PL)**

(74) Representative: **Bury, Marek**
**Bury & Bury**
**ul. Przyczolkowa 124**
**02-968 Warszawa (PL)**

(56) References cited:
• **STELMASZCZYK KAMIL ET AL: "Ultrafast Time-of-Flight Method of Gasoline Contamination Detection Down to ppm Levels by Means of Terahertz Time-Domain Spectroscopy", APPLIED SCIENCES, vol. 12, no. 3, 4 February 2022 (2022-02-04), page 1629, XP055979676, DOI: 10.3390/app12031629**
• **Keck Cornelia M.: "Chapter 5: Determination Of The Real Refractive Index", Dissertation entitled : "Cyclosporine nanosuspensions: Optimised Size Characterisation & Oral Formulations", 8 October 2006 (2006-10-08), pages 118-148, XP055980298, Retrieved from the Internet: URL:https://refubium.fu-berlin.de/bitstrea m/handle/fub188/11046/04_5Chapter5.pdf?seq uence=5&isAllowed=y [retrieved on 2022-11-11] & Keck Cornelia M.: "Cyclosporine nanosuspensions: Optimised Size Characterisation & Oral Formulations", , 8 October 2006 (2006-10-08), XP055980292, Retrieved from the Internet: URL:https://refubium.fu-berlin.de/handle/f ub188/11046 [retrieved on 2022-11-11]**
• **Sima Sergiu ET AL: "Application of refractive index mixing rules in binary systems containing n-octane, 2-hexanol or 2-octanol at 298.15 K", Revista de chimie, vol. 65, no. 2 February 2014 (2014-02), pages 2021-2024, XP055980152, Bucharest Retrieved from the Internet: URL:https://www.researchgate.net/publicati on/289343998 [retrieved on 2022-11-10]**

- Petrov Mihai: "Concentration determination by means of refractometric method: A consequent dilution of an unknown binary aqueous solution", Academia Journal of Scientific Research, January 2021 (2021-01), pages 9-18, XP055980195, DOI: 10.15413/ajsr.2020.0417 Retrieved from the Internet: URL:https://www.researchgate.net/publicati on/348999852_Concentration_determination_b y_means_of_refractometric_method_A_conseq u ent_dilution_of_an_unknown_binary_aqueous_ solution [retrieved on 2022-11-10]

## Description

**Field of the invention**

The invention concerns a method of determination of a refractive index of substances in a liquid phase in terahertz frequency bands.

**State of the art**

Various methods of measuring of parameters of media using radiation propagation measurements in terahertz bands are known in the art.

In particular THz radiation pulses are known in the state of the art to be applicable for a time measurement and are generally understood as pulses containing a wide band of frequencies from 10GHz up to 50 GHz - EP2167914B1.

There are known ways to measure concentrations of high-loss substances based on an attenuation of a radiation propagating through them. Fabry-Perot resonator interferometric measurements based on an amplitude drop assessment are disclosed for example in Dobroiu, Adrian & Beigang, Rene & Otani, Chiko & Kawase, Kodo. (2005); Monolithic Fabry-Perot resonator for the measurement of optical constants in the terahertz range; Applied Physics Letters 86; 261107-261107; 10.1063/1.1968423 cited in EP2035809.

An article by Stelmaszczyk, K.; Karpierz-Marczewska, E.; Mikhnev, V.; Cywinski, G.; Skotnicki, T.; Knap, W.; Ultrafast Time-of-Flight Method of Gasoline Contamination Detection Down to Ppm Levels by Means of Terahertz Time-Domain Spectroscopy; Applied Sciences 2022, 12, 1629, doi:10.3390/app12031629 discusses a method and a measurement setup for detection of impurities based on analysis of time of propagation.

European patent no EP2035809 discloses a method for measuring an electrical permeability using a time-domain propagation of narrow terahertz-band pulses. Such measurements fall into a group of Terahertz time-domain spectroscopy (THz-TDS) techniques.

A disadvantage of methods such as that disclosed in EP2035809 is that in a case of high loss substances, not only is it mathematically more difficult to determine the permeability from the delay, but it is also difficult to carry out pulse delay and/or pulse temporal shape measurements when the received pulse is attenuated and distorted by the high loss medium. It is difficult to generate short pulses having high energy and using longer pulses requires increase of container length to preserve precision. The container length on the other hand contributes to the total attenuation and again limits possibility of precise measurement. It is an object of the invention to resolve this problem.

**Summary of the invention**

A method of measuring a refractive index of a liquid substance under test with a time-domain spectroscopy measurement system adapted to measuring a propagation of radiation pulse through a container, according to the invention includes a step of determination of a difference between a propagation time in a base measurement step, and a propagation time in a main measurement step with the container comprising the liquid substance under test. The refractive index of the substance under test is computed using said difference. According to the invention the radiation pulse is a terahertz radiation pulse. Before the main measurement step the liquid substance under test is diluted with a known solvent of an absorption lower than an absorption of the liquid substance under test, to obtain a solution having an absorption low enough to enable a measurement of the terahertz radiation pulse transmitted through the container filled with the solution. In the main measurement step a first concentration of the substance under test in the solution is recorded, and a first time of propagation in the solution is measured. Then the substance under test is diluted to a second concentration and the main measurement step is repeated so that a second concentration of the liquid substance under test in the solution is recorded, and a second time of propagation in the solution is measured. The base measurement is carried out with the container filled with the pure solvent to obtain a base propagation time. Subsequently a mixing rule for modelling the dilution is selected so as to fit at least the first concentration and the first propagation time and the second concentration and the second propagation time and the base propagation time. Based on the selected mixing rule and known refractive index of the solvent, the refractive index of substance under test is determined using a difference between the base propagation time and at least one of the propagation times obtained in the main measurement. Energy of the measurement pulses in the teraherz measurement systems is limited. Thanks to the dilution of the liquid substance under test measurement it is possible to determine a refractive index of a substance under test which is so absorptive that the terahertz measurement pulse transmitted through the container filled with the pure substance under test is too weak for a precise measurement. Having two measurements and the base measurement enables testing the applicability of the mixing rule and once applicable is selected using it to determine the refractive index of the pure substance under test.

Advantageously, the mixing rule is selected from a group comprising Eykman equation, Lorentz-Lorentz equation, Newton equation and Gladstone-Dale equation. These rules have been tested to often be applicable, however a person skilled in the art is able to suggest others.

Advantageously, the container used for the measurement of the liquid substance under test is selected so that its length along the THz pulse propagation path is greater than a velocity of light in vacuum multiplied by a quotient of terahertz time-domain spectroscopy measurement system resolution by a tolerance of permittivity measurement. This allows full use of the measurement equipment abilities to obtain precise measurement.

Advantageously, the terahertz radiation pulse having width shorter than or equal to 2 ps. The width of the radiation pulse is defined as time in which 90% of the energy of the pulse is accumulated. Use of the short pulses increases the time resolution of the measurement and that in turn allows to use shorter containers. As the length of the container contributes to the attenuation of transmission the shorter pulses enable using higher concentrations and therefore increasing precision of determination of the refractive index.

Advantageously, the main measurement step is repeated more than one time. Multiple measurement points enable better test of applicability of the mixing rule and obtaining overdefined set of equations for determination of the refractive index which contributes to reduces an error of the measurement.

Advantageously, the first pure solvent is measured for a determination of the base propagation time and then fractions of the substance under test are added and the subsequent main measurement steps are executed. That mode of operation enables fast operation without refiling the container but still controlling the concentration.

Alternatively, the fractions of the substance under test are selected so as to obtain values of a volumetric concentration of the liquid substance under test in a subsequent measurement following a geometrical series of

$$\phi_{x_n} = \frac{1}{2^n}$$

concentrations                    . That mode of operation involves a waste of the solvent but reduces a risk of a human error as it starts with the highest concentration and every time half of the measured solution is poured out and replaced with the pure solvent.

**Description of drawings**

The invention has been described below in detail, with reference to the following figures in which

Fig. 1 shows a block diagram of exemplary measurement system applicable with the method according to the invention,

Fig. 2 shows a block diagram of alternative configuration of measurement setup applicable with the method according to the invention,

Fig. 3 shows family of delayed pulses corresponding to different concentration of isopropanol in gasoline,

Fig. 4 shows relation between concentration and terahertz pulse propagation time in solution of isopropanol in gasoline.

**Embodiments of the invention**

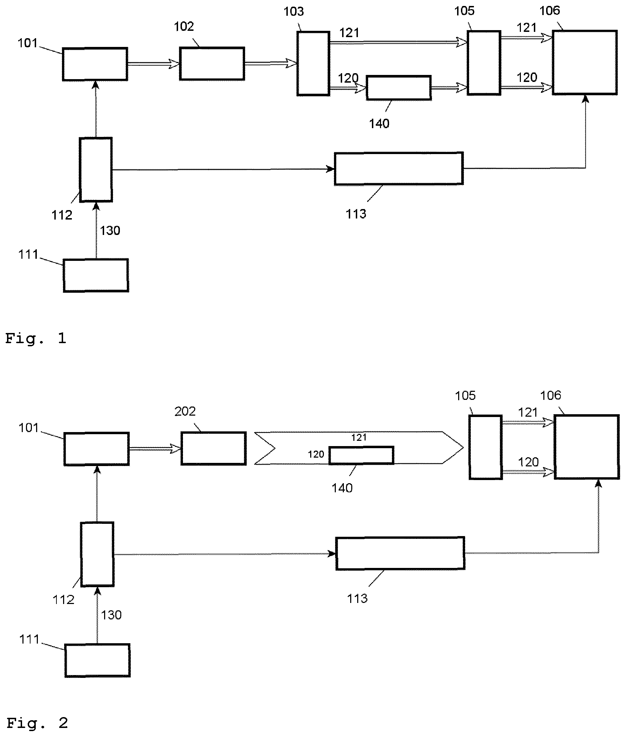

A block diagram of a measurement system applicable for a method according to the invention is shown in Fig. 1. The system comprises a THz transmitter **101** triggered with a pulse from an optical control pulse emitting laser **111**. The THz transmitter generates THz pulses having width of approximately 2 ps, while optical control pulse emitting laser generates triggering pulses having a width of c.a. 50 fs i.e. two orders of magnitude shorter than the THz pulse.

The triggering pulse is directed to a beam splitting element realized as a beam splitter **112** e.g. a semitransparent mirror. The beam splitter **112** directs split pulses to a delay line **113** and to the THZ pulse transmitter **101**. The THz pulse transmitter **101** triggered with the triggering pulse **130** generates a THz pulse which is fed to a beam former **102**.

The beam splitter **112** can be replaced by other elements used in optical measurements for splitting radiation e.g. based on optical fibers or waveguides.

The triggering pulse **130** propagating via the delay line **113** is fed to a THz receiver **106**. The THz receiver **106** is triggered for a detection with the triggering pulse **130** fed from the delay line **113**.

A beam of radiation from the beam former **102** is divided into a reference beam portion **121** and a measurement beam portion **120**.

The division to the measurement beam portion **120** and the reference beam portion **121** is realized with a beam splitter **103**. The reference beam portion **121** propagates directly to a beam former **105**. The measurement beam portion **120** propagates from the beam splitter **103** via a measurement container **140** for accommodating the substance under test, to the beam former **105**.

Alternatively, the measurement beam portion and the reference beam portion can be portions of the same beam formed with a beam former **202** to have an aperture large enough to cover more than just area of container **140**. Such configuration is shown in Fig. 2. Accordingly, a portion of beam propagates through the container **140** and the substance therein and another portion of beam propagates outside said container **140**. The former is the measurement beam portion **120** and the latter is the reference beam portion **121**.

The reference beam portion **121** is used for accommodating a THz pulse time position. It is used to correct time jitter or time-drift of the THz pulse and avoid errors in measurements with the measurement beam portion **120**.

The reference beam portion **121** and the measurement beam portion **120** from the beam former **105** are fed to the THz receiver **106**.

Examples of applicable measurement setups are discussed in article concerning such measurement setups for detection impurities: Stelmaszczyk, K.; Karpierz-Marczewska, E.; Mikhnev, V.; Cywinski, G.; Skotnicki, T.; Knap, W.; Ultrafast Time-of-Flight Method of Gasoline Contamination Detection Down to Ppm Levels by Means of Terahertz Time-Domain Spectroscopy; Applied Sciences 2022, 12, 1629, doi:10.3390/app12031629.

Initially a delay of the delay line **113** is selected so that the THz receiver **106** is triggered with the triggering pulse **130** to start detection exactly in the moment the THz radiation pulses in measurement beam **120** portion and reference beam portion **121** reach the THz receiver **106** or a short advance time earlier. Short advance time gives a margin before samples of measurement pulse propagating through the container are recorded. The 30 ps or less is a reasonable advance time. Then both the triggering pulse **130** and the THz radiation pulses are repeatedly sent. The delay of the delay line is gradually increased, hence after numerous repetitions a sampled time waveform of the received THz radiation pulse is obtained.

The method according to the invention can be executed using the measurement setup described above to determine the time of propagation of the terahertz radiation pulse. The use of the THz radiation pulse for measuring the time of propagation is accurately enough to determine the refractive index. However, when the substance under test is highly absorbing, then the time of propagation in the pure substance under test cannot be measured due to a lack of measurable intensity of the transmitted pules. When the substance under test is diluted with a less absorbing solvent to enable the measurement of the time of propagation, then the refractive index of the solution of the substance under test in the solvent is different than the refractive index of the substance under test.

The relation between the concentration and the resulting refractive index usually follows one of few mixing rules known in the art. Which rule it is depends on the solvent and on the substance under test. Therefore two main measurements of the refractive index of the absorbing substances under test with terahertz radiation pulses are needed. It appears that with at least two main measurements and base measurement it can be observed which mixing rule fits the best and is appropriate.

The method according to the invention enables measuring refractive index of the liquid substance under test with a terahertz time-domain spectroscopy measurement system adapted to measuring a propagation of THz radiation pulse through a container.

Measurements of at least two different concentrations of the substance under test in a solvent allow selection of appropriate mixing rule which fits the best measurement points and then solving it to determine the refractive index of the substance under test.

Before the main measurement step, the substance under test is diluted with a solvent of an absorption lower than the absorption of the substance under test, to obtain a solution having an absorption low enough to obtain a measureable transmitted THz radiation pulse.

In the main measurement step, a first concentration of the substance under test in the solution is recorded, and a first time of propagation in the solution is measured.

Subsequently, the substance under test is diluted to a second concentration and the main measurement step is repeated so that a second concentration of the substance under test in the solution is recorded, and a second time of propagation in the solution is measured.

Additionally, the base measurement is carried out with the container filled with the pure solvent to obtain a base propagation time.

Adequate mixing rule for modeling dilution known in the art is selected so as to fit the first concentration and the first propagation time and the second concentration and the second propagation time and the base propagation time.

Based on the selected mixing rule and the known refractive index of the solvent, a refractive index of the substance under test is determined.

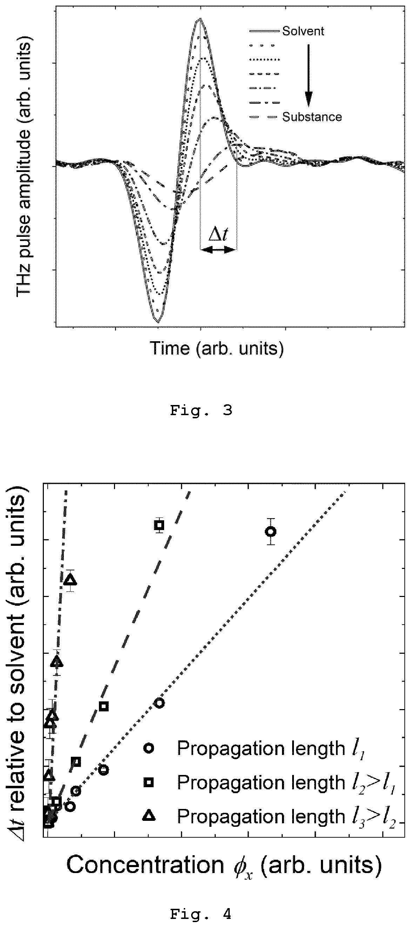

It is easy to measure a pure solvent first and determine the base propagation time. The refractive index $n_S$ of the solvent needs to be known. Gasoline is often an applicable solvent. Fig. 3 shows an exemplary family of delayed pulses corresponding to different concentrations of the substance under test being isopropanol, in gasoline. Isopropanol is highly absorbing at THz frequency bands.

The determination of the refractive index includes fitting a predefined mathematical function to the THz radiation pulse waveform and determining times corresponding to peak amplitudes or a center of masses of pulses in the measurement beam portion 120 and the reference beam portion 121. The difference in a time of arrival between the THz radiation pulse in the reference beam portion 121 and in the measurement beam portion 120 is a propagation time in the container filed with a substance.

The propagation time in a container filed with the pure solvent is the base propagation time. Difference between the propagation time in container filed with solution comprising substance under test and the base propagation time defines a time difference $\Delta t$ as shown in Fig. 3. That time difference is used for determination of the refractive index of the solution of given concentration of the substance under test in the solvent. Knowing the adequate mixing rule allows determining the refractive index of the pure (not diluted) substance under test.

In the art there are known numerous rules allowing for determination of the refractive index $n_D$ of solution of volume or mass concentration $\Phi_x$ of substance having a refractive index of $n_x$ in a solvent having a refractive index $n_S$ and having concentration $\phi_S = 1 - \phi_x$. Said rules are discussed e.g. in Tasic, A.Z.; Djordjevic, B.D.; Grozdanic, D.K.; Radojkovic, N. Use of Mixing Rules in Predicting Refractive Indexes and Specific Refractivities for Some Binary Liquid Mixtures. J. Chem. Eng. Data 1992, 37, 310-313 or in Resa, J.M.; González, C.; Ortiz de Landaluce, S.; Lanz, J. Densities, Excess Molar Volumes, and Refractive Indices of Ethyl Acetate and Aromatic Hydrocarbon Binary Mixtures. J. Chem. Thermodyn. 2002, 34, 995-1004.

Typical applicable rules include for example:

Eykman equation:

$$\frac{n_D^2-1}{n_D^2+0.4} = \phi_x \frac{n_x^2-1}{n_x^2+0.4} + \phi_s \frac{n_s^2-1}{n_s^2+0.4},$$

Lorentz-Lorentz equation:

$$\frac{n_D^2-1}{n_D^2+2} = \phi_x \frac{n_x^2-1}{n_x^2+2} + \phi_s \frac{n_s^2-1}{n_s^2+2},$$

Newton equation:

$$n_D^2 - 1 = \phi_s(n_s^2 - 1) + \phi_x(n_x^2 - 1),$$

Gladstone-Dale equation:

$$n_D - 1 = \phi_s(n_s - 1) + \phi_x(n_x - 1).$$

In further description it is focused on Gladstone-Dale equation as it is the one easiest to follow.

A method of measuring the refractive index $n_x$ of the liquid substance under test involving the terahertz time-domain spectroscopy measurement system adapted to measuring a propagation of THz radiation pulse through a container, involves determination of the difference $\Delta t$ of the propagation time in the base measurement and in the measurement with the container comprising the substance under test having the known concentration $\phi_x$ when the adequate mixing rule is applied.

Unexpectedly it turned out that for a number of substances just two main measurement steps and recording information about: a first concentration $\phi_{x,1}$ of substance under test in a solution and a first time difference $\Delta t_1$ as well as a second concentration $\phi_{x,2}$ of substance under test in a solution and a second time difference $\Delta t_2$ give enough information to either select an adequate mixing rule or even observe that for given concentrations more than one mixing rule gives precise results. Having two measurements and the base measurement enables testing the applicability of the known mixing rule and once applicable is selected using it to determine the refractive index of the pure substance under test.

Naturally, taking more measurements allows better fitting of the mixing rule to the substance under test and also more precise determination of the refractive index. It is crucial that the measurement step is carried out for at least two concentrations of the liquid substance under test in the solution. Fig. 4 shows measurement points of function $\Delta t(\phi_x)$ taken for a number of values of volume concentrations of isopropyl alcohol (ispopropanol) in gasoline. Having at least two points enables selecting adequate mixing rule, construing a solvable set of equations and determining value of refractive index $n_x$

of pure, non-dissolved substance under test. The results shown in Fig. 4 were obtained for three different lengths of measurement container 140. Generally, the greater is the length of the container 140 along the propagation path of the terahertz radiation pulse, the more precise measurement of time can be. Limiting factors are convenience of use and attenuation due to absorption.

Having measurement points $\Delta t(\phi_{x,i})$ enables applying most appropriate mixing rule by curve fitting or solving the model parameters with an overdefined equation system.

As a result of the base measurement is known, if it can be reasonably assumed that the measurement will fall in the linear range of the curve $\Delta t(\phi)$, then even single measurement is enough to determine refractive index but finding this segment takes at least two measurements.

Refractive index is derived from model comprising two equations. One equation represents mixing rule of impact of concentration of substance under test in the solvent on the refractive index of the solution. It has been determined that to the data shown in Fig. 4 a mixing rule given by the Gladstone-Dale equation fits the best:

$$n_D - 1 = \phi_s(n_s - 1) + \phi_x(n_x - 1).$$

The other equation represents impact of refractive index of solution on change in propagation time with respect to propagation in the pure solvent:

$$\Delta t = \frac{l}{c} \cdot (n_D - n_s)$$

, where *l* represents length of radiation propagation path in the container **140** filed with the liquid substance and *c* represents velocity of light in a vacuum.

When Gladstone-Dale mixing rule is applied, theoretically it is possible to determine a concentration in just one measurement if refractive index $n_s$ is known:

$$n_x = \frac{\Delta t \cdot c}{l \cdot \phi_x} + n_s$$

In practice errors in administering concentrations and imperfections of mixing rules make single measurement insufficient and time differences for at least two and preferably more concentrations need to be measured.

Quite efficient measurement process starts measuring a propagation time through container **140** filed with the pure solvent of the known refractive index $\phi_S$. Then the container **140** filed with the solution of volume concentration $\phi_{x1}$ of 1:1 in proportion of the substance under test and the solvent.

The difference $\Delta t_1$ of propagation of the THz radiation pulse propagating through the pure solvent and the solution of the substance under test is determined and noted. This step is repeated with different values $\phi_{x_n}$ of the concentration of the substance under test in the solution in which liquid is consecutively diluted in the weight proportion of 1:1 with addition of the solvent. Thus

$$\phi_{x_n} = \frac{1}{2^n}$$

a geometrical series of concentrations is obtained. It enables finding concentration that is absorbing low enough for measurement in a fast and efficient way.

Person skilled in the art having read the teachings of the description above is able to routinely use other mixing rules than given in example as well as mixing rules based on mass proportions or mol concentration instead of volume proportion.

The invention allows determination of a refractive index of substances that are too absorptive to be measured with a direct measurement of a measurement pulse transmitted through the substance under test. For the precise measurement wideband terahertz pulses are required. They have relatively low energy and are easily attenuated. The invention alleviates this problem.

**Claims**

1. A method of measuring a refractive index of a liquid substance under test with a time-domain spectroscopy measurement system adapted to measuring a propagation of radiation pulse through a container **(140)**, including a step of determination of a difference between

   a propagation time determined in a base measurement step, and
   a propagation time, determined in a main measurement step, through the container **(140)** comprising the liquid substance under test,
   and computing the refractive index of the substance under test based on said difference, wherein
   the radiation pulse is a terahertz radiation pulse, **characterized in that**
   before the main measurement step
   the liquid substance under test is diluted with a known solvent of an absorption lower than absorption of the liquid substance under test, to obtain a solution having absorption low enough to enable a measurement of the terahertz radiation pulse transmitted through the container **(140)** filled with the solution, and
   in the main measurement step

   a first concentration of the substance under test in the solution is recorded, and
   a first time of propagation of the terahertz radiation pulse in the solution is measured,

   then the substance under test is diluted to a second concentration and the main measurement step is repeated so that

   a second concentration of the test liquid substance in the solution is recorded, and
   a second time of propagation in the solution is measured,

   wherein the base measurement is carried out with the container **(140)** filled with the pure solvent to obtain a base propagation time,
   and then a mixing rule for modelling the dilution is selected so as to fit the first concentration and the first propagation time and the second concentration and the second propagation time and the base propagation time, and
   based on the selected mixing rule and known refractive index of the solvent, the refractive index of the liquid substance under test is determined based on the difference between the base propagation time and at least one of the propagation times determined in the main measurement.

2. Method according to claim 1, wherein the mixing rule is selected from a group comprising Eykman equation, Lorentz-Lorentz equation, Newton equation and Gladstone-Dale equation.

3. Method according to claim 1 or 2, wherein the container **(140)** used for the measurement of the test liquid substance is selected so that its length along the THz pulse propagation path is greater than a velocity of light in a vacuum multiplied by a quotient of the terahertz time-domain spectroscopy measurement system resolution by a tolerance of permittivity measurement.

4. Method according to claim 1 or 2 or 3, wherein the terahertz radiation pulse width is shorter than or equal to 2 ps.

5. The method according to any of claim 1 to 4, wherein the main measurement step is repeated more than one time.

6. The method according to claim 5, wherein the first pure solvent is measured for a determination of the base propagation time and then fractions of the substance under test are added and the subsequent main measurement steps are executed.

7. The method according to claims 1 to 5, wherein fractions of the liquid substance under test are selected so as to obtain values of a volumetric concentration of the substance under test in a subsequent measurement following a geometrical series of concen-

trations $\phi_{x_n} = \dfrac{1}{2^n}$.

**Patentansprüche**

1. Verfahren des Messens eines Brechungsindexes einer im Test befindlichen flüssigen Substanz mit einem Zeitbereichsspektroskopie-Messsystem, das zum Messen einer Ausbreitung eines Strahlungsimpulses durch einen Behälter (140) angepasst ist, mit einem Schritt der Bestimmung einer Differenz zwischen

   einer in einem Basismessschritt bestimmten Ausbreitungszeit, und
   einer, in einem Hauptmessschritt bestimmten, Ausbreitungszeit durch den Behälter (140), der die im Test befindliche flüssige Substanz umfasst, und
   Berechnen des Brechungsindexes der im Test befindlichen Substanz basierend auf dieser Differenz,

   wobei

   der Strahlungsimpuls ein Terahertz-Strahlungsimpuls ist, **dadurch gekennzeichnet, dass** vor dem Hauptmessschritt
   die im Test befindliche flüssige Substanz mit einem bekannten Lösungsmittel mit einer Absorption geringer als eine Absorption der im Test befindlichen flüssigen Substanz verdünnt wird, um eine Lösung mit einer Absorption zu erhalten, die niedrig genug ist, um eine Messung des Terahertz-Strahlungsimpulses zu ermöglichen, der durch den mit der Lösung gefüllten Behälter (140) übertragen wird, wobei
   in dem Hauptmessschritt

   eine erste Konzentration der im Test befindlichen Substanz in der Lösung aufgezeichnet wird, und
   eine erste Ausbreitungszeit des Terahertz-Strahlungsimpulses in der Lösung gemessen wird,

   dann die im Test befindliche Substanz auf eine zweite Konzentration verdünnt und der Hauptmessschritt wiederholt wird, so dass

   eine zweite Konzentration der im Test befindlichen flüssigen Substanz in der Lösung aufgezeichnet wird, und
   eine zweite Ausbreitungszeit in der Lösung gemessen wird,

   wobei die Basismessung mit dem mit dem reinen Lösungsmittel gefüllten Behälter (140) ausgeführt wird, um eine Basisausbreitungszeit zu erhalten,
   und wobei dann eine Mischungsregel zum Modellieren der Verdünnung ausgewählt wird, um so die erste Konzentration und die erste Ausbreitungszeit und die zweite Konzentration und die zweite Ausbreitungszeit und die Basisausbreitungszeit anzupassen, und wobei basierend auf der ausgewählten Mischungsregel und dem bekannten Brechungsindex des Lösungsmittels der Brechungsindex der im Test befindlichen Substanz basierend auf der Differenz zwischen der Basisausbreitungszeit und mindestens einer der in der Hauptmessung bestimmten Ausbreitungszeiten bestimmt wird.

2. Verfahren nach Anspruch 1, wobei die Mischungsregel ausgewählt wird aus einer Gruppe umfassend Eykman-Gleichung, Lorentz-Lorentz-Gleichung, Newton-Gleichung und Gladstone-Dale-Gleichung.

3. Verfahren nach Anspruch 1 oder 2, wobei der für die Messung der im Test befindlichen flüssigen Substanz verwendete Behälter (140) ausgewählt wird, so dass seine Länge entlang des THz-Pulsausbreitungspfads größer ist als eine Lichtgeschwindigkeit in einem Vakuum multipliziert mit einem Quotienten aus der Auflösung des Terahertz-Zeitbereichsspektroskopie-Messsystems und einer Permittivitätsmessungstoleranz.

4. Verfahren nach Anspruch 1 oder 2, wobei die Terahertz-Strahlungspulsbreite kürzer als oder gleich 2 Pikosekunden ist.

5. Verfahren nach einem der Ansprüche 1 bis 4, wobei der Hauptmessschritt mehr als einmal wiederholt wird.

6. Verfahren nach Anspruch 5, wobei das erste reine Lösungsmittel für eine Bestimmung der Basisausbreitungszeit gemessen wird, und dann Bruchteile der im Test befindlichen Substanz hinzugefügt und die nachfolgenden Hauptmessschritte ausgeführt werden.

7. Verfahren nach einem der Ansprüche 1 bis 5, wobei Bruchteile der im Test befindlichen flüssigen Substanz ausgewählt werden, um so Werte einer volumetrischen Konzentration der im Test befindlichen Substanz in einer nachfolgenden Messung nach einer geometrischen Reihe von Konzentrationen zu

erhalten $\phi_{x_n} = \frac{1}{2^n}$ .

## Revendications

1. Procédé de mesure d'un indice de réfraction d'une substance liquide en cours de test avec un système de mesure par spectroscopie dans le domaine temporel adapté pour mesurer une propagation d'une impulsion de rayonnement à travers un conteneur (**140**), incluant une étape de détermination d'une différence entre

> un temps de propagation déterminé dans une étape de mesure de base, et
> un temps de propagation, déterminé dans une étape de mesure principale, à travers le conteneur (140) comprenant la substance liquide en cours de test,
> et calcul de l'indice de réfraction de la substance en cours de test sur la base de ladite différence, dans lequel
> l'impulsion de rayonnement est une impulsion de rayonnement térahertz,
> **caractérisé en ce qu'**avant l'étape de mesure principale
> la substance liquide en cours de test est diluée avec un solvant connu d'une absorption inférieure à l'absorption de la substance liquide en cours de test, pour obtenir une solution ayant une absorption suffisamment basse pour permettre une mesure de l'impulsion de rayonnement térahertz transmise à travers le conteneur (**140**) rempli de la solution, et
> dans l'étape de mesure principale

>> une première concentration de la substance en cours de test dans la solution est enregistrée, et
>> un premier temps de propagation de l'impulsion de rayonnement térahertz dans la solution est mesuré,

> ensuite, la substance en cours de test est diluée à une deuxième concentration et l'étape de mesure principale est répétée de sorte qu'une deuxième concentration de la substance liquide test dans la solution est enregistrée, et
> un deuxième temps de propagation dans la solution est mesuré,
> dans lequel la mesure de base est effectuée avec le conteneur (**140**) rempli du solvant pur pour obtenir un temps de propagation de base, et ensuite une règle de mélange pour modéliser la dilution est choisie de manière à ajuster la première concentration et le premier temps de propagation et la deuxième concentration et le deuxième temps de propagation et le temps de propagation de base, et
sur la base de la règle de mélange choisie et de l'indice de réfraction connu du solvant, l'indice de réfraction de la substance liquide en cours de test est déterminé sur la base de la différence entre le temps de propagation de base et au moins un des temps de propagation déterminés dans la mesure principale.

2. Procédé selon la revendication 1, dans lequel la règle de mélange est choisie dans le groupe comprenant l'équation d'Eykman, l'équation de Lorentz-Lorentz, l'équation de Newton et l'équation de Gladstone-Dale.

3. Procédé selon la revendication 1 ou 2, dans lequel le conteneur (**140**) utilisé pour la mesure de la substance liquide test est choisi de sorte que sa longueur le long du trajet de propagation de l'impulsion THz est supérieure à une vitesse de la lumière dans un vide multipliée par un quotient de la résolution du système de mesure par spectroscopie térahertz dans le domaine temporel par une tolérance de mesure de la permittivité.

4. Procédé selon la revendication 1 ou 2 ou 3, dans lequel la largeur de l'impulsion de rayonnement térahertz est inférieure ou égale à 2 ps.

5. Procédé selon l'une quelconque des revendications 1 à 4, dans lequel l'étape de mesure principale est répétée plus d'une fois.

6. Procédé selon la revendication 5, dans lequel le premier solvant pur est mesuré pour déterminer le temps de propagation de base et ensuite des fractions de la substance en cours de test sont ajoutées et les étapes de mesure principales ultérieures sont exécutées.

7. Procédé selon les revendications 1 à 5, dans lequel des fractions de la substance liquide en cours de test sont choisies de manière à obtenir des valeurs d'une concentration volumétrique de la substance en cours de test dans une mesure ultérieure suivant une série géométrique de concentrations

$$\phi_{x_n} = \frac{1}{2^n}$$

.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2167914 B1

- EP 2035809 A

### Non-patent literature cited in the description

- **DOBROIU, ADRIAN ; BEIGANG, RENE ; OTANI, CHIKO ; KAWASE, KODO.** Monolithic Fabry-Perot resonator for the measurement of optical constants in the terahertz range. *Applied Physics Letters,* 2005, vol. 86, 261107-261107

- **STELMASZCZYK, K. ; KARPIERZ-MARCZEWS-KA, E. ; MIKHNEV, V. ; CYWINSKI, G. ; SKOT-NICKI, T. ; KNAP, W.** Ultrafast Time-of-Flight Method of Gasoline Contamination Detection Down to Ppm Levels by Means of Terahertz Time-Domain Spectroscopy. *Applied Sciences,* 2022, vol. 12, 1629

- **TASIC, A.Z. ; DJORDJEVIC, B.D. ; GROZDANIC, D.K. ; RADOJKOVIC, N.** Use of Mixing Rules in Predicting Refractive Indexes and Specific Refractivities for Some Binary Liquid Mixtures. *J. Chem. Eng. Data,* 1992, vol. 37, 310-313

- **RESA, J.M. ; GONZÁLEZ, C. ; ORTIZ DE LANDA-LUCE, S. ; LANZ, J.** Densities, Excess Molar Volumes, and Refractive Indices of Ethyl Acetate and Aromatic Hydrocarbon Binary Mixtures. *J. Chem. Thermodyn.,* 2002, vol. 34, 995-1004